Europäisches Patentamt

European Patent Office

Office européen des brevets

(11) Publication number: **0 437 909 A1**

# EUROPEAN PATENT APPLICATION

(21) Application number: 90300512.2

(22) Date of filing: 18.01.90

(51) Int. Cl.⁵: **F16L 37/08**, F16B 21/07, A01M 7/00

(43) Date of publication of application:
24.07.91 Bulletin 91/30

(84) Designated Contracting States:
AT BE CH DE DK ES FR GB GR IT LI LU NL SE

(71) Applicant: NOMIX MANUFACTURING
COMPANY LIMITED
Portland Building Portland Street
Staple Hill Bristol BS16 4PS(GB)

(72) Inventor: **Ali, Eren**
51 Alma Road
Clifton Bristol(GB)

(74) Representative: **Cheyne, John Robert
Alexander Mackenzie et al
HASELTINE LAKE & CO. Hazlitt House 28,
Southampton Buildings Chancery Lane
London WC2A 1AT(GB)**

(54) A tubular member having an end fitting.

(57) A tubular member, such as a support tube 10 in a herbicide applicator, is received in an opening 32 in an end fitting 16. The support tube 10 is retained in the opening 32 by projections 36 engaging apertures 44 in the support tube 10. The support tube 10 has slots 42 which enable the wall of the support tube 10 to ride over the projections 36 during insertion. The slots 42 cooperate with ribs 34 which guide the support tube 10 to ensure correct alignment of the apertures 44 with the projections 36.

FIG.4.

EP 0 437 909 A1

# A TUBULAR MEMBER HAVING AN END FITTING

This invention relates to a tubular member having an end fitting, and is particularly, although not exclusively, concerned with a tubular member serving as a support tube interconnecting a handset and a delivery head in a herbicide applicator.

A herbicide applicator is disclosed in EP0300762. That applicator comprises a handset and a delivery head which is connected to the handset by a support tube. The support tube has a fitting at one end, by which the support tube is secured to the handset. The fitting has a circular bore within which the support tube is received, the support tube being fixed to the fitting by means of an adhesive.

The use of an adhesive makes the assembly process generally inconvenient. Not only does the application of the adhesive involve an extra step in the assembly process, but specific measures have to be taken by the assembly worker to ensure that the axial and rotational alignment of the support tube with respect to the fitting are correct.

According to the present invention, an end of the tubular member is retained in an opening in the end fitting by a projection extending into the opening in the end fitting and engaging an aperture formed in the wall of the tubular member, the tubular member having an axially extending slot which cooperates with a formation provided on the end fitting to maintain the angular position of the tubular member with respect to the end fitting as the end of the tubular member is inserted into the opening in the end fitting. The slot preferably extends along the tubular member from one end, and the formation on the end fitting may be an axially extending rib which cooperates with the slot in order to maintain the required angular relationship between the tubular member and the end fitting. The fully inserted position of the tubular member in the end fitting may be defined by abutment between the rib and the end of the slot. The tubular member may have two of the slots, disposed diametrically opposite each other.

The slot or slots may be angularly offset by 90° from the aperture, around the axis of the tubular member.

The projection preferably has a ramped surface so as to guide the wall of the tubular member over it as the tubular member is inserted. The required resilience of the tubular member is enhanced by the provision of the slot. Consequently, when the aperture reaches the projection, the wall of the tubular member snaps into contact with the inner wall of the opening in the end fitting, with the projection engaging the aperture. There may be two apertures on the tubular member, with corresponding projections on the end fitting, disposed respectively diametrically opposite one another.

In a preferred embodiment in accordance with the present invention, the tubular member is a support tube of a herbicide applicator, and the end fitting is secured within a support casing of the applicator.

For a better understanding of the present invention, and to show how it may be carried into effect, reference will now be made, by way of example, to the accompanying drawing, in which:

Figure 1 shows a handset and part of a support tube of a herbicide applicator;

Figure 2 is an enlarged fragmentary view showing the connection between the support tube and the handset of Figure 1;

Figure 3 is an exploded view of the support tube and an end fitting;

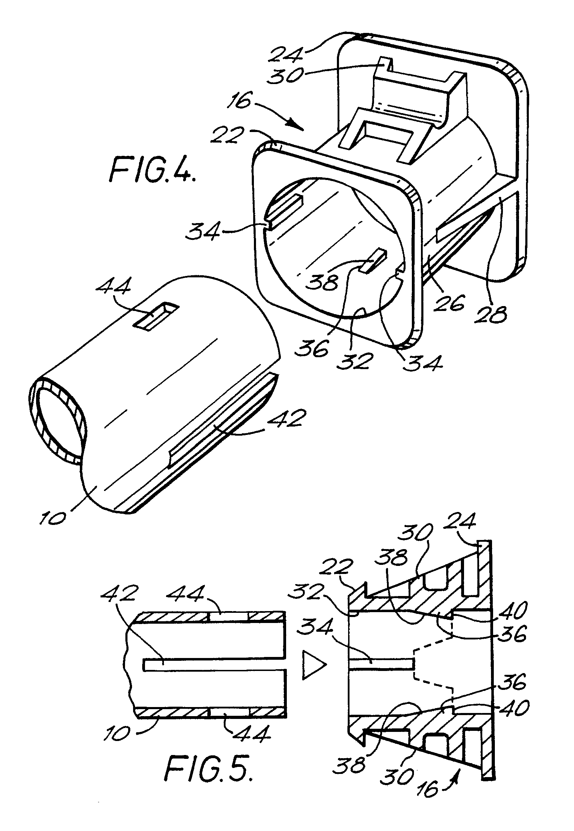

Figure 4 corresponds to Figure 3 but shows the support tube and the end fitting viewed from a different angle; and

Figure 5 is a sectional view of the support tube and the end fitting.

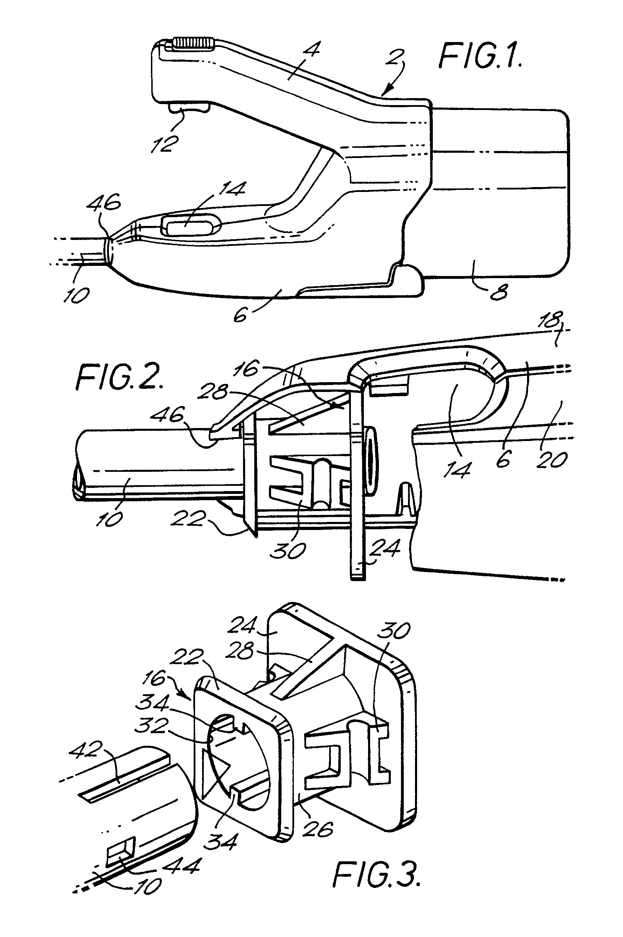

The handset 2 shown in Figure 1 comprises a handle portion 4 and a support portion 6. A container 8 of herbicide to be applied is fitted to the handset 2 and is connected, through a valve (not shown) to a supply tube which extends within the interior of a support tube 10 to a delivery head (not shown) at the end of the support tube 10 away from the handset 2. The general construction and operation of the applicator shown in Figure 1 are the same as those of the applicator disclosed in EP0300762. Thus, the delivery head accommodates an electric motor driving a spinning distribution disc which, in operation, ejects the herbicide. A trigger 12 provided on the handle portion 4 serves to operate both the valve and an electrical switch controlling the supply of current to the motor in the delivery head. A further control (not shown) provided in the region 14 of the support portion 6 serves to control the speed of the motor in the delivery head.

Referring to Figure 2, the support tube 10 is provided with an end fitting 16. The handset 2 comprises a split casing made from two moulded parts 18, 20 which, when joined together, clamp the fitting 16 between them so as to secure the support tube 10 to the handset 2. For this purpose, the fitting 16 has two locating flanges 22, 24 for engagement by the casing parts 18, 20. A cylindrical portion 26 extends between the flanges 22, 24, and strengthening webs 28 and 30 are provided to improve the rigidity of the fitting 16.

The fitting 16 has an opening 32 which is of generally circular cross-section of the same diameter as the outer diameter of the support tube 10. Two inwardly projecting axially extending ribs 34 are provided in the opening 32 at diametrically opposite positions. Also, two inwardly directed projections 36 are provided in the opening 32. The projections 36 are also situated diametrically opposite one another, but are angularly offset by 90° from the ribs 34. As shown in Figure 5, the ribs 34 extends from the end of the opening 32 adjacent the flange 22 to a position approximately midway along the opening 32. The projections 36 each have a ramp surface 38 which slopes radially inwardly of the opening 32 from the axial position at which the ribs 34 terminate to a transversely extending shoulder 40 situated inwardly of the end of the opening 32 adjacent the flange 24.

The end of the support tube 10 is provided with two slots 42 which are situated diametrically opposite each other and extend along the support tube 10 from the end. Also, the support tube 10 has two rectangular apertures 44 situated a short distance from the end of the support tube 10.

To assemble the applicator, the internal parts of the casing 2 are located within the moulded casing parts 18 and 20, which are then joined together. Thus, the fitting 16, without the support tube 10, is rigidly secured within the assembled casing 2. To fit the support tube 10, it is simply inserted into the end fitting 16, through a hole 46 in the casing 2. The support tube 10 is aligned so that the slots 42 will pass over the ribs 34, which ribs 34 then provide guidance for the remainder of the movement of the support tube 10. When the end of the support tube 10 encounters the ramp surfaces 38 of the projections 36, the wall of the support tube 10 is deflected radially inwardly as it travels over the projections 36. This radially inwards deflection is permitted by the resilience of the material of the support tube 10 (which may, for example, be a metal, such as aluminium alloy, or plastics), and by the slots 42 which, by the time the end of the support tube 10 encounters the projections 36, have begun to move beyond the inner ends of the ribs 34.

When the support tube 10 is fully inserted, the apertures 44 are aligned with the projections 36, and the wall of the support tube 10 can snap outwardly again. The shoulders 40 of the projections 36 then prevent withdrawal of the support tube 10. At the same time, the ends of the ribs 34 adjacent the flange 22 abut the closed ends of the slots 42 to define the fully inserted position of the support tube 10.

It will be appreciated that the secure connection between the support tube 10 and the end fitting 16 is achieved by the simple operation of pushing the support tube 10 into the end fitting 16, without the use of any adhesive, or any separate fastenings. Furthermore, the cooperation between the ribs 34 and the slots 42 ensure that the projections 36 make proper engagement with the apertures 34. In addition, the angular position of the support tube 10 and the end fitting 16 (and therefore the handset 2) is properly established. An advantage of the connection is that no special moulding or other forming process is required on the support tube 10, other than the cutting of the slots 42 and the piercing of the apertures 44, both of which are simple operations.

## Claims

1. A tubular member (10) having an end fitting (16), characterised in that an end of the tubular member (10) is retained in an opening (32) in the end fitting (16) by a projection (36) extending into the opening (32) in the end fitting (16) and engaging an aperture (44) formed in the wall of the tubular member (10), the tubular member (10) having an axially extending slot (42) which cooperates with a formation (34) provided on the end fitting (16) to maintain the angular position of the tubular member (10) with respect to the end fitting (16) as the end of the tubular member (10) is inserted into the opening (32) in the end fitting (16).

2. A tubular member as claimed in claim 1, characterised in that the slot (42) opens at one end of the tubular member (10).

3. A tubular member as claimed in claim 1 or 2, characterised in that the formation (34) on the end fitting (16) is a rib (34) which engages the slot (42).

4. A tubular member as claimed in claim 3, characterised in that the rib (34) abuts the end of the slot (42) when the tubular member (10) is fully inserted into the opening (32).

5. A tubular member as claimed in any one of the preceding claims, characterised in that the slot (42) is angularly offset from the aperture (44) by 90° about the axis of the tubular member (10).

6. A tubular member as claimed in any one of the preceding claims, characterised in that the projection (36) has a ramp surface (38) to deflect the wall of the tubular member (10) during insertion.

7. A tubular member as claimed in any one of the preceding claims, characterised in that two of the apertures (44) and the projections (36) are provided, situated diametrically opposite each other.

8.  A tubular member as claimed in any one of the preceding claims, characterised in that the end fitting (16) is mounted in a support case (2).

9.  A tubular member as claimed in claim 8, characterised in that the support casing is a handset of a herbicide applicator.

FIG.1.

FIG.2.

FIG.3.

FIG.4.

FIG.5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-U-8412937 (G.MEICKEL) <br> * page 6, paragraph 1; figures 1-2 * | 1, 6-7 | F16L37/08 <br> F16B21/07 <br> A01M7/00 |
| A | DE-A-2756247 (SOCIETE DE SIGNALISATIONSAUTOMOBILES SEIMA) <br> * page 7, line 5 - page 8, paragraph 3; figures 1-7 * | 1-4 | |
| D,A | EP-A-300762 (NOMIX MANUFACTURING COMPANY LTD.) <br> * abstract; figure 10 * | 8-9 | |
| A | US-A-1661674 (M.OSBORN) <br> * page 1, lines 38 - 61; figures 1-3 * | 1 | |
| A | US-A-4201407 (R.J.PATERICK) | | |
| A | US-A-4711472 (K.R.SCHNELL) | | |

TECHNICAL FIELDS SEARCHED (Int. Cl.5 )

F16L
F16B
A01M

The present search report has been drawn up for all claims

| Place of search | Date of completion of the search | Examiner |
|---|---|---|
| THE HAGUE | 07 SEPTEMBER 1990 | NEHRDICH H.J |